# FASCICULE DE BREVET EUROPEEN

(11) **EP 1 380 241 B1**
(45) Date de publication et mention de la délivrance du brevet: **10.11.2010**
(21) Numéro de dépôt: 03356094.7
(22) Date de dépôt: 19.06.2003
(51) Int. Cl.: A47G 19/12, A47J 45/06

(54) **Coiffe de verseuse comportant un recipient en verre**
Gussgriff für einen Glasbehälter
Pouring handle for a glass container

(30) Priorité: 08.07.2002 FR 0208575
(43) Date de publication de la demande: 14.01.2004
(73) Titulaire: SEB S.A., 69130 Ecully (FR)
(72) Inventeur: Lebrun, Erik, 65420 Ibos (FR); Lafond, Jean-Marie, 65420 Ibos (FR); Lalanne-Eygun, Jacques, 65400 Beaucens (FR)
(74) Mandataire: Kiehl, Hubert

(56) Documents cités:
- EP-A- 0 693 267
- US-A- 4 090 648
- US-A- 4 838 463
- US-A- 5 111 975

## Description

La présente invention se rapporte au domaine technique général des récipients à usage alimentaire, et concerne plus particulièrement les récipients en verre comportant une coiffe présentant une poignée de préhension.

La coiffe est généralement réalisée en matière plastique. La coiffe permet d'obtenir une poignée ainsi qu'un bec verseur dans une même pièce. Cette pièce est assemblée par collage sur le bord supérieur du récipient en verre, notamment au moyen d'une colle alimentaire telle qu'une colle silicone, assez souple, ou une colle polyamide, plus rigide. La souplesse de la colle permet d'absorber les différences de dilatation entre le verre du récipient et la matière plastique de la coiffe.

Une verseuse comportant un récipient en verre muni d'une telle coiffe présente l'avantage de ne comporter aucune pièce métallique, et peut ainsi passer au four à micro-ondes pour réchauffer la boisson. Les coûts de matière et de fabrication peuvent être réduits par rapport à une verseuse comportant une poignée collée, réalisée par exemple en matière plastique de type ABS résistant à la chaleur, et un bec verseur formé sur le récipient en verre lors d'une opération de reprise.

Il est connu de réaliser une verseuse du type précité, comportant un récipient en verre dont les parois latérales présentent un rétrécissement en dessous d'un bord supérieur évasé. Le diamètre libre au niveau du rétrécissement est de 9 cm. Le récipient est associé à une coiffe comportant une paroi annulaire tronconique extérieure et une paroi annulaire intérieure sensiblement verticale reliée par une collerette supérieure. La paroi extérieure présente sur sa face intérieure une série de nervures s'étendant chacune sur une portion de circonférence. La poignée est issue de la face extérieure de la paroi annulaire extérieure. La hauteur de la paroi annulaire est de 1,8 cm. Le diamètre extérieur du bord supérieur du récipient est inférieur au diamètre intérieur laissé libre par les nervures. Les nervures positionnées autour du rétrécissement permettent de former un ancrage dans la colle silicone utilisée pour assembler le récipient avec la coiffe. En effet, si l'adhésion de la colle silicone sur le verre du récipient est satisfaisante, l'adhésion de la colle silicone sur une matière plastique de la coiffe telle que le polypropylène est limitée. Il a été observé que la construction précitée présentait des risques de déchaussement de la coiffe à température ambiante.

Il est également connu de réaliser une verseuse du type précité, dans laquelle le récipient en verre comporte, au dessus du rétrécissement, un épaulement surmonté d'une paroi annulaire sensiblement verticale. Le diamètre libre au niveau du rétrécissement du récipient est de 8 cm. La hauteur de la paroi annulaire de la coiffe est de 23 mm. L'épaisseur de la coiffe est de 4 mm. La coiffe est réalisée en polypropylène. La coiffe est solidarisée avec le récipient par une colle polyamide semi-rigide, qui adhère bien sur le verre et dont l'adhérence sur le polypropylène est supérieure à l'adhérence du silicone sur le polypropylène. Ces dispositions permettent de former une coiffe très rigide dans laquelle le récipient est solidement ancré. Toutefois une telle construction nécessite des quantités de matière importantes. De plus le diamètre de l'ouverture du récipient est réduit.

Une coiffe selon le préambule de la revendication 1 est connue de US-4,838,463 A1.

Un objet de la présente invention est de proposer une coiffe pour une verseuse comportant un récipient en verre, dans laquelle la hauteur de la paroi annulaire peut être réduite, sans compromettre la solidité de l'assemblage de la coiffe avec le récipient.

Un autre objet de la présente invention est de proposer une coiffe pour une verseuse comportant un récipient en verre, dans laquelle le diamètre de l'ouverture peut être augmenté, sans compromettre la solidité de l'assemblage de la coiffe avec le récipient.

Un autre objet de la présente invention est de proposer une coiffe pour une verseuse comportant un récipient en verre, dans laquelle l'épaisseur des parois annulaires peut être réduite, sans compromettre la solidité de l'assemblage de la coiffe avec le récipient.

Ces objets sont atteints avec une coiffe pour une verseuse comportant un récipient en verre, cette coiffe comprenant une partie annulaire présentant une gorge annulaire à ouverture inférieure, la gorge annulaire comportant une paroi annulaire intérieure et une paroi annulaire extérieure, une ou plusieurs protubérance(s) étant ménagée(s) sur une zone annulaire s'étendant sur la face intérieure de la paroi annulaire extérieure, respectivement de la paroi annulaire intérieure, une poignée étant raccordée à la partie annulaire, la zone annulaire étant agencée entre l'extrémité libre de la paroi annulaire extérieure et le raccordement de la poignée à la partie annulaire, du fait que en ce que la partie annulaire est raccordée à la poignée par une partie de liaison, la partie de liaison étant séparée de la partie annulaire au niveau de la zone annulaire jusqu'à l'extrémité libre de la paroi annulaire extérieure, jusqu'à 45° sur la circonférence de la coiffe de part et d'autre de la poignée.

En d'autres termes, la zone annulaire garnie au moins en partie de protubérances s'étend de manière circonférentielle sur une face latérale de la gorge, et le raccordement de la poignée à la partie annulaire est réalisé à un niveau supérieur à celui de ladite zone annulaire.

En d'autres termes, la poignée n'est pas directement issue de la partie annulaire. Les éventuels efforts de la poignée au niveau de la zone annulaire comportant les protubérances et jusqu'à l'extrémité libre de la paroi annulaire extérieure sont reportés à plus de 45° sur la circonférence de la partie annulaire de la coiffe.

Cette disposition permet d'éviter une transmission directe des efforts entre la partie annulaire et la poignée. Les risques de déchaussement des protubérances lors d'un effort sur la poignée sont ainsi fortement réduits. L'épaisseur et/ou la hauteur de la partie annulaire peuvent être réduites, et/ou le diamètre de la partie annulaire peut être augmenté, en limitant le risque de déchaussement de la coiffe du récipient en verre.

La partie supérieure du récipient est insérée dans la gorge annulaire préalablement garnie de colle polyamide. Les protubérances permettent de réaliser un ancrage de la coiffe dans la colle polyamide. Grâce à la disposition des ancrages utilisée par l'invention, le déchaussement de la coiffe lors d'un effort exercé sur la poignée est rendu beaucoup plus difficile, voire quasiment impossible, même après un échauffement de la verseuse de plus de 50° par rapport à la température ambiante. La coiffe n'a plus besoin d'être extrêmement rigide, ce qui permet d'envisager des épaisseurs de parois de la coiffe moins importantes, et/ou une hauteur de coiffe moins importante, et/ou un diamètre de coiffe plus important.

Avantageusement, un épaulement extérieur est ménagé sur la face intérieure de la paroi annulaire intérieure, respectivement de la paroi annulaire extérieure, en vis à vis de la zone annulaire. Cette disposition permet de conserver une épaisseur de colle relativement constante entre le réceptacle et la gorge de la coiffe, et de favoriser une répartition plus importante de la colle entre le récipient en verre et la paroi de la gorge opposée à ladite paroi annulaire, qui permet de mieux répartir les contraintes dans la colle.

Avantageusement encore, une collerette supérieure relie la paroi annulaire intérieure à la paroi annulaire extérieure. Cette disposition permet de réduire la hauteur de la gorge. En alternative, les parois annulaires intérieure et extérieure peuvent notamment être reliées par une voûte de section arrondie ou brisée.

Avantageusement, la partie de liaison est dépourvue d'ouvertures. Cette disposition facilite le nettoyage de la coiffe.

Avantageusement, la partie de liaison est au moins partiellement annulaire. Cette disposition contribue à rigidifier la coiffe.

Avantageusement alors la partie de liaison comporte une couronne intérieure prolongeant la paroi annulaire extérieure. Ainsi lorsque la coiffe est obtenue par moulage de matière plastique, les retassures se formant au niveau de la jonction de la collerette supérieure sont reportées sur la face extérieure de la couronne intérieure et de la paroi annulaire extérieure.

Selon une forme de réalisation avantageuse, la partie de liaison comporte une couronne périphérique agencée autour de la partie annulaire, la poignée étant issue de ladite couronne périphérique. Cette disposition permet de rigidifier la partie de la coiffe reliée à la poignée. Cette disposition permet également de limiter les pertes thermiques par rayonnement sur la partie latérale de la coiffe. Avantageusement alors l'épaisseur de la couronne périphérique est inférieure à 3 mm.

Avantageusement alors, la partie de liaison comporte une collerette radiale reliée à la couronne périphérique. Cette disposition permet de rigidifier encore la coiffe. Cette disposition permet également de limiter la conduction thermique vers la poignée, donc de limiter le refroidissement du réceptacle et de son contenu. Cette disposition permet aussi de limiter l'échauffement de la poignée, si la coiffe est réalisée en un matériau assez bon conducteur de chaleur.

Avantageusement alors, la collerette radiale relie le sommet de la couronne intérieure au sommet de la couronne périphérique. Cette disposition permet de faciliter le nettoyage de la coiffe. Cette disposition permet également de cacher les retassures formées sur la face extérieure de la partie annulaire. En alternative, la collerette radiale peut être issue de la couronne intérieure, et/ou de la partie annulaire dans la zone située au dessus des protubérances.

Selon une autre forme de réalisation, la partie de liaison comporte une portion de couronne périphérique agencée partiellement autour de la partie annulaire, la poignée étant issue de ladite portion de couronne périphérique. Cette disposition permet également de rigidifier la partie de la coiffe reliée à la poignée.

Avantageusement alors la partie de liaison comporte une portion de collerette radiale reliée à la portion de couronne périphérique. Cette disposition permet de rigidifier encore la coiffe. Cette disposition permet également de limiter la conduction thermique vers la poignée, donc de limiter le refroidissement du réceptacle et de son contenu. Cette disposition permet aussi de limiter l'échauffement de la poignée, si la coiffe est réalisée en un matériau assez bon conducteur de chaleur.

Avantageusement alors, la portion de collerette radiale relie le sommet de la couronne intérieure au sommet de la portion de couronne périphérique. Cette disposition permet de faciliter le nettoyage de la coiffe.

Avantageusement, la coiffe comporte un bec verseur. Avantageusement alors, le bec verseur est ménagé au moins partiellement dans la couronne intérieure du montant annulaire. En alternative, la coiffe peut comporter un orifice d'écoulement, associé ou non à un moyen d'obturation.

Avantageusement encore, la coiffe présente un rapport diamètre extérieur sur hauteur supérieur à 4. Ces dimensions s'entendent hors poignée et hors bec verseur. Cette disposition permet de réduire l'encombrement de la coiffe.

Avantageusement encore, la partie annulaire ménage une ouverture dont la largeur est supérieure à 3 fois la hauteur de la coiffe. Ces dimensions s'entendent hors poignée. Cette disposition permet de diminuer l'inclinaison nécessaire de la verseuse pour le versement de la boisson. Le service est facilité.

Avantageusement encore, la couronne périphérique est cylindrique ou est tronconique avec un angle inférieur à 20°. Cette disposition permet d'augmenter l'ouverture de la coiffe.

Avantageusement encore, la coiffe est réalisée en polypropylène. Ce matériau est bon marché et facile à travailler tant au niveau des formes que des couleurs. Cependant, l'adhésion des colles alimentaires telles que les colles polyamide est moindre sur ce matériau que sur le verre. Toutefois, grâce à la construction de la coiffe selon l'invention, les efforts exercés sur la poignée ne se reportent que très faiblement sur l'assemblage avec la verseuse en verre.

Avantageusement encore, la ou les protubérances ménagent des moyens d'ancrage en rotation. Ces moyens d'ancrage peuvent être en creux ou en relief. Ces moyens d'ancrage permettent d'éviter la rotation de la coiffe par rapport à la colle liée au récipient, la liaison entre la colle et le récipient étant plus résistante que la liaison entre la colle et la coiffe.

L'invention sera mieux comprise à l'étude de six exemples de réalisation, pris à titre nullement limitatif, et illustrés dans les figures annexées dans lesquelles:
- la figure 1 est une vue de dessous en perspective d'un premier exemple de réalisation d'une coiffe selon l'invention,
- la figure 2 est une vue en coupe transversale d'une verseuse comportant la coiffe selon le premier exemple de réalisation illustré à la figure 1,
- la figure 3 est une vue partielle en perspective d'une section au niveau de la poignée de la coiffe selon le premier exemple de réalisation illustré aux figures 1 et 2,
- la figure 4 est une vue partielle en perspective d'une section au niveau de la poignée de la coiffe selon un deuxième exemple de réalisation,
- la figure 5 est une vue partielle en perspective d'une section au niveau de la poignée de la coiffe selon un troisième exemple de réalisation,
- la figure 6 est une vue partielle en perspective d'une section au niveau de la poignée de la coiffe selon un quatrième exemple de réalisation,
- la figure 7 est une vue partielle de dessous d'une coiffe selon un cinquième exemple de réalisation,
- la figure 8 est une vue partielle en coupe transversale d'une verseuse comportant une coiffe selon un sixième exemple de réalisation.

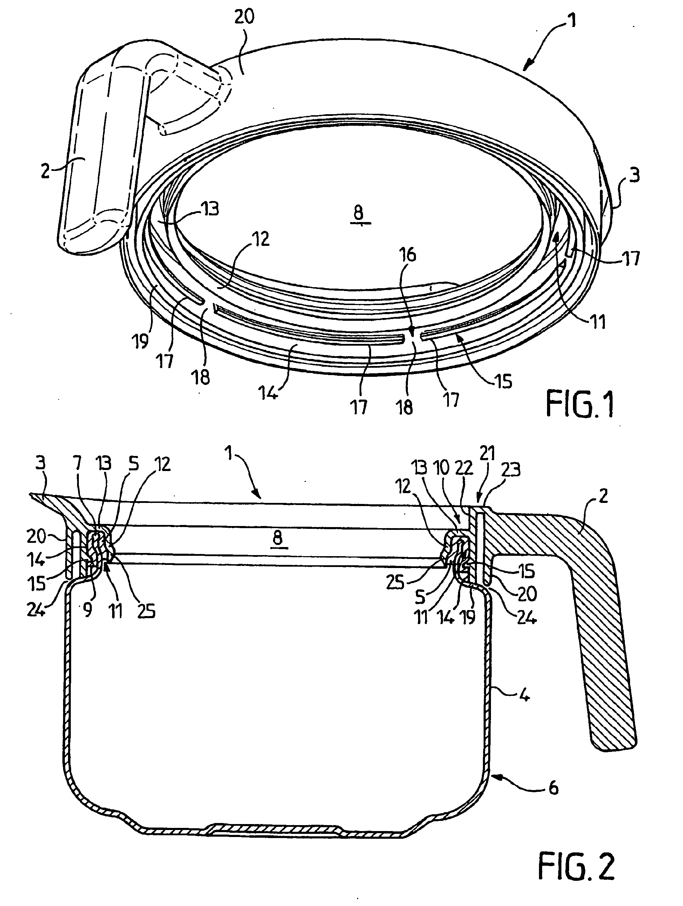

La figure 1 montre une coiffe 1 comportant une poignée 2 et un bec verseur 3. La coiffe 1 est prévue pour être assemblée à un récipient 4 au moyen d'un dépôt de colle polyamide 5 pour former une verseuse 6, tel que montré à la figure 2. Le récipient 4 est réalisé en verre. Le bord supérieur 7 du récipient 4 est flammé pour former un bourrelet. Un épaulement intérieur 9 est ménagé sous le bord 7.

La présence du bec verseur 3 sur la coiffe 1 permet de simplifier les opérations de formage du récipient 4. La coiffe 1 présente une ouverture 8 pouvant être obturée par un couvercle, non représenté aux figures. La coiffe 1 est avantageusement réalisée en matière plastique bon marché, telle que par exemple le polypropylène. La coiffe 1 peut être moulée en une seule pièce.

La coiffe 1 comprend une partie annulaire 10 présentant une gorge annulaire 11 à ouverture inférieure. La gorge annulaire 11 est prévue pour recevoir la partie supérieure du récipient 4. La gorge annulaire 11 comporte une paroi annulaire intérieure 12 et une paroi annulaire extérieure 14. La gorge annulaire 11 présente sur la face intérieure de la paroi annulaire extérieure 14 une zone annulaire 16 garnie au moins en partie de protubérances 15.

L'épaulement intérieur 9 du récipient 4 permet de conserver une épaisseur de colle 5 suffisante entre les protubérances 15 et le récipient 4, pour pouvoir absorber les dilatations de la verseuse 6.

La paroi annulaire intérieure 12 comporte un épaulement extérieur 25 ménagé en vis à vis des protubérances 15, tel que montré à la figure 2. L'épaulement 25 permet de réduire l'épaisseur de colle 5 entre la paroi 12 et la partie supérieure du récipient 4.

Tel que montré à la figure 1, la paroi annulaire intérieure 12 est reliée par une collerette supérieure 13 à la paroi annulaire extérieure 14. Les protubérances 15 sont formées par une série de nervures 17 séparées par des passages 18. Les passages 18 facilitent la réalisation des nervures 17 lors du moulage de la coiffe 1. Les passages 18 ménagés par les protubérances 15 réalisent des moyens d'ancrage de la coiffe 1 dans la colle 5.

La partie annulaire 10 est raccordée à la poignée 2 par une partie de liaison 21, mieux visible sur la figure 2. La partie de liaison 21 comporte une couronne périphérique 20 agencée autour de la partie annulaire 10. La poignée 2 est issue de la couronne 20. La partie de liaison 21 comporte une couronne intérieure 22 prolongeant la paroi annulaire extérieure 14. Une collerette radiale 23 relie la couronne intérieure 22 à la couronne périphérique 20. Plus particulièrement, la collerette radiale 23 relie le sommet de la couronne intérieure 22 au sommet de la couronne périphérique 20. La partie de liaison 21 est dépourvue d'ouvertures. La couronne 20 est cylindrique et présente un diamètre sensiblement égal à celui de la paroi latérale du récipient 4, cette paroi latérale étant également cylindrique. L'extrémité libre 19 de la paroi annulaire extérieure 14 repose sur le récipient 4.

La couronne 20 ménage un passage 24 avec le récipient 4. Le passage 24 permet d'éviter la rétention d'eau ou de produits lessiviels entre la paroi 14 et la couronne 20 lorsque l'utilisateur a lavé la verseuse 6.

La collerette radiale 23 permet de limiter la transmission des calories issues du récipient 6 vers la poignée 2. Cette disposition permet de limiter le refroidissement de la boisson contenue dans le récipient 4.

La coiffe 1 présente un diamètre extérieur de 160 mm et une hauteur de 32 mm, ces dimensions s'entendant hors poignée et hors bec verseur, ce qui donne un rapport diamètre extérieur sur hauteur de l'ordre de 5. La largeur de l'ouverture 8 ménagée dans la partie annulaire est de 125 mm, ce qui donne un rapport largeur de l'ouverture sur hauteur de l'ordre de 3,9. La possibilité d'obtenir une ouverture 8 de grande largeur facilite le versement de la boisson, alors que la hauteur limitée de la coiffe 1 permet d'obtenir une verseuse 6 moins haute sans affecter sa capacité.

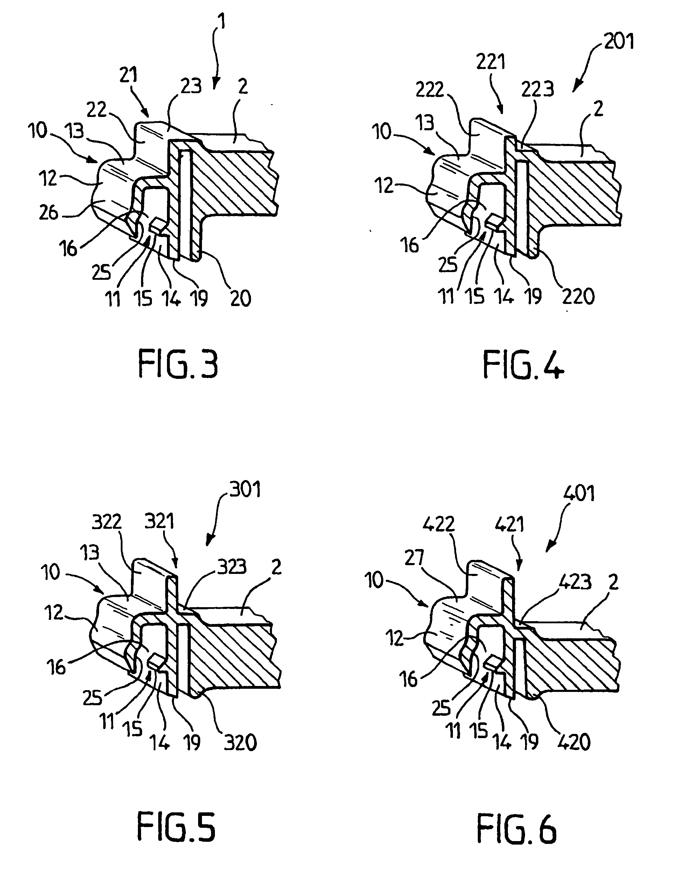

Tel que visible aux figures 2 et 3, les protubérances 15 sont agencées entre l'extrémité libre 19 de la paroi annulaire extérieure 14 et le raccordement de la poignée 2 à la partie annulaire 10.

Lorsque l'utilisateur saisit la verseuse 6 par la poignée 2, les efforts sont transmis au récipient 4 par l'intermédiaire de la couronne périphérique 20, de la collerette radiale 23, de la couronne intérieure 22 reliée à la partie annulaire 10 présentant la gorge 11. Comme la couronne 22 prolonge la paroi annulaire extérieure 14 sur laquelle sont ménagées les protubérances 15, les efforts exercés sur la poignée 2 ne contribuent pas à déformer la paroi annulaire extérieure 14. Les protubérances 15 restent ainsi ancrées dans le joint 5.

Le deuxième exemple de réalisation illustré à la figure 4 diffère du premier exemple de réalisation par la construction de la partie de liaison 221 de la coiffe 201. La collerette radiale 223 relie la couronne périphérique 220 à la paroi extérieure de la couronne intérieure 222. La liaison de la collerette 223 avec la couronne 222 s'effectue entre le sommet et la base de la couronne 222. Cette disposition permet aussi de répartir les efforts s'exerçant sur la partie annulaire 10.

Le troisième exemple de réalisation illustré à la figure 5 diffère des exemples de réalisation précédents également par la construction de la partie de liaison 321 de la coiffe 301. La collerette radiale 323 relie la couronne périphérique 320 à la partie annulaire 10 au niveau de la jonction avec la couronne intérieure 322. De ce fait, la couronne intérieure 322 ne fait plus partie de la partie de liaison 321. Cette disposition permet aussi de répartir les efforts s'exerçant sur la partie annulaire 10. A titre de variante, la couronne 322 pourrait être au moins partiellement supprimée.

Le quatrième exemple de réalisation illustré à la figure 6 diffère des exemples de réalisation précédents également par la construction de la partie de liaison 421 de la coiffe 401. La collerette radiale 423 relie la couronne périphérique 420 à la partie annulaire 10 au niveau de la face extérieure de la paroi 14, au dessus des protubérances 15. De ce fait, la couronne intérieure 422 ne fait pas partie de la partie de liaison 421. Cette disposition permet encore de répartir les efforts s'exerçant sur la partie annulaire 10. A titre de variante, la couronne 422 pourrait être au moins partiellement supprimée.

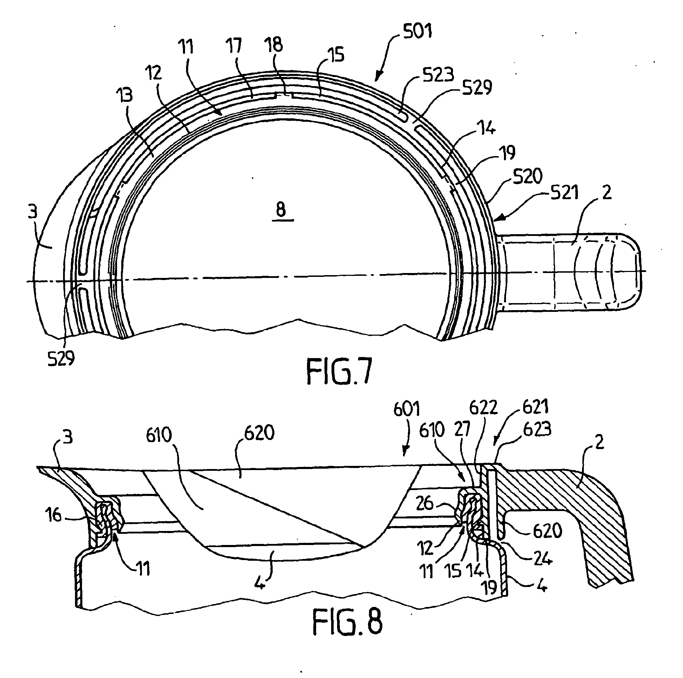

Le cinquième exemple de réalisation illustré à la figure 7 diffère des exemples de réalisation précédents également par la construction de la partie de liaison 521 de la coiffe 501. La collerette radiale 523 relie la couronne périphérique 520 à la partie annulaire 10 selon la réalisation de l'un des exemples de réalisation précédents. Des montants 529 sont ménagés entre la couronne 520 et la paroi annulaire extérieure 14. Les montants 529 peuvent atteindre l'extrémité libre 19 de la paroi annulaire extérieure 14. Toutefois, du fait que les montants 529 sont décalés de plus de 45° par rapport à l'axe de la poignée 2, les efforts exercés sur la poignée ne contribuent pas au déchaussement des protubérances 15.

Le sixième exemple de réalisation illustré à la figure 8 diffère du premier exemple de réalisation en ce que la poignée 2 de la coiffe 601 est issue d'une portion de couronne périphérique 620 s'étendant sur une partie seulement de la circonférence de la partie annulaire 610, de préférence sur au moins le tiers de ladite circonférence, et avantageusement sur au moins la moitié de ladite circonférence. La partie de liaison 621 comporte une portion de collerette radiale 623 reliant la portion de couronne périphérique 620 à la couronne intérieure 622. Cette disposition permet aussi de répartir les efforts s'exerçant sur la partie annulaire 10. L'épaisseur de la portion de collerette radiale 623 peut être augmentée pour obtenir une plus grande rigidité. A titre de variante, d'autres raccordements de la partie de liaison 621 à la partie annulaire 610 peuvent être envisagés, par exemple ceux des deuxième, troisième ou quatrième exemples de réalisation.

A titre de variante, les parties de liaison 21, 221, 321, 421, 521, 621 peuvent comporter des ouvertures. En d'autres termes, plusieurs montants peuvent relier la couronne extérieure 20, 220, 320, 420, 520 ou la portion de couronne 620 à la partie annulaire 10, 610.

A titre de variante, le bec verseur 3 peut être remplacé par une ouverture de versement ménagée dans la coiffe au dessus de la partie annulaire 10, 610.

A titre de variante, les protubérances 15 peuvent être ménagées sur la face interne de la paroi annulaire intérieure 12, un épaulement étant alors avantageusement ménagé dans la paroi annulaire extérieure 14.

A titre de variante, les protubérances peuvent être formées par une série d'ergots répartis sur l'une des parois latérales de la gorge 11 voire sur les deux. Les moyens d'ancrage sont alors formés par les passages entre les ergots.

A titre de variante, les protubérances peuvent être remplacées par une seule nervure formant une protubérance circonférentielle. Un passage peut alors être réalisé dans ladite nervure pour former des moyens d'ancrage anti-rotation.

A titre de variante, la ou des protubérances peuvent comporter des moyens d'ancrage formés par des secteurs en relief ou en creux s'étendant au dessus de la partie principale de la ou des protubérances, et/ou en dessous de la partie principale de la ou des protubérances, et/ou latéralement sur la partie principale de la ou des protubérances, c'est à dire sur la partie principale de l'épaisseur de la ou des protubérances, ou dans l'épaisseur de la partie principale de la ou des protubérances.

A titre de variante, les montants reliant la partie annulaire à la couronne extérieure peuvent être envisagés pour le sixième exemple de réalisation relatif à une partie de liaison comportant une portion de couronne.

La présente invention n'est nullement limitée aux exemples de réalisation décrits et à leurs variantes, mais englobe de nombreuses modifications dans le cadre des revendications.

## Revendications

1. Coiffe (1 ; 201 ; 301 ; 401 ; 501 ; 601) pour une verseuse (6) comportant un récipient (4) en verre, cette coiffe comprenant une partie annulaire (10 ; 610) présentant une gorge annulaire (11) à ouverture inférieure, la gorge annulaire (11) comportant une paroi annulaire intérieure (12) et une paroi annulaire extérieure (14), une ou plusieurs protubérance(s) (15) étant ménagée(s) sur une zone annulaire (16) s'étendant sur la face intérieure de la paroi annulaire extérieure (14), respectivement de la paroi annulaire intérieure, une poignée (2 ; 602) étant raccordée à la partie annulaire (10 ; 610), la zone annulaire (16) étant agencée entre l'extrémité libre de la paroi annulaire extérieure (14) et le raccordement de la poignée (2 ; 602) à la partie annulaire (10, 610), **caractérisée en ce que** la partie annulaire (10 ; 610) est raccordée à la poignée (2) par une partie de liaison (21 ; 221 ; 321 ; 421 ; 521 ; 621), la partie de liaison étant séparée de la partie annulaire (10 ; 610) au niveau de la zone annulaire (16) jusqu'à l'extrémité libre de la paroi annulaire extérieure (14), jusqu'à 45° sur la circonférence de la coiffe de part et d'autre de la poignée (2).

2. Coiffe selon la revendication 1, **caractérisée en ce qu'**un épaulement extérieur (25) est ménagé sur la face intérieure de la paroi annulaire intérieure (12), respectivement de la paroi annulaire extérieure, en vis à vis de la zone annulaire (16).

3. Coiffe selon l'une des revendications 1 ou 2, **caractérisée en ce qu'**une collerette supérieure (13) relie la paroi annulaire intérieure (12) à la paroi annulaire extérieure (14).

4. Coiffe selon l'une des revendications 1 à 3, **caractérisée en ce que** la partie de liaison (21 ; 221 ; 321 ; 421 ; 521 ; 621) est dépourvue d'ouvertures.

5. Coiffe selon l'une des revendications 1 à 4, **caractérisée en ce que** la partie de liaison (21 ; 221 ; 321 ; 421 ; 521 ; 621) est au moins partiellement annulaire.

6. Coiffe selon les revendications 3 et 5, **caractérisée en ce que** la partie de liaison (21 ; 221) comporte une couronne intérieure (22 ; 222) prolongeant la paroi annulaire extérieure (14).

7. Coiffe selon l'une des revendications 1 à 6, **caractérisée en ce que** la partie de liaison (21 ; 221 ; 321 ; 421 ; 521) comporte une couronne périphérique (20 ; 220 ; 320 ; 420 ; 520) agencée autour de la partie annulaire (10), la poignée (2) étant issue de ladite couronne périphérique (20 ; 220 ; 320 ; 420 ; 520).

8. Coiffe selon la revendication 7, **caractérisée en ce que** la partie de liaison (21 ; 221 ; 321 ; 421) comporte une collerette radiale (23 ; 223 ; 323 ; 423) reliée à la couronne périphérique (20 ; 220 ; 320 ; 420).

9. Coiffe selon les revendications 6 et 8, **caractérisée en ce que** la collerette radiale (23) relie le sommet de la couronne intérieure (22) au sommet de la couronne périphérique (20).

10. Coiffe selon l'une des revendications 1 à 6, **caractérisée en ce que** la partie de liaison (621) comporte une portion de couronne périphérique (620) agencée partiellement autour de la partie annulaire (610), la poignée (2) étant issue de ladite portion de couronne périphérique (620).

11. Coiffe selon la revendication 10, **caractérisée en ce que** la partie de liaison (621) comporte une portion de collerette radiale (623) reliée à la portion de couronne périphérique (620).

12. Coiffe selon les revendications 6 et 11, **caractérisée en ce que** la portion de collerette radiale (623) relie le sommet de la couronne intérieure (622) au sommet de la portion de couronne périphérique (620).

13. Coiffe selon l'une des revendications 1 à 12, **caractérisée en ce qu'**elle comporte un bec verseur (3).

14. Coiffe selon l'une des revendications 1 à 13, **caractérisée en ce qu'**elle présente un rapport diamètre extérieur sur hauteur supérieur à 4.

15. Coiffe selon l'une des revendications 1 à 14, **caractérisée en ce que** la partie annulaire (10) ménage une ouverture (8) dont la largeur est supérieure à 3 fois la hauteur de la coiffe.

16. Coiffe selon l'une des revendications 1 à 15, **caractérisée en ce que** la ou les protubérances (15) ménagent des moyens d'ancrage en rotation.

## Claims

1. A lid (1; 201; 301; 401; 501; 601) for a jug (6) having a glass container (4), said lid comprising an annular portion (10; 610) with an annular throat (11) with a lower opening, the annular throat (11) having an inner annular wall (12) and an outer annular wall (14), one or more protuberance(s) (15) being provided on an annular zone (16) extending on the inner face from the outer annular wall (14), respectively from the inner annular wall, a handle (2; 602) being connected to the annular portion (10; 610), the annular zone (16) being arranged between the free end of the outer annular wall (14) and the connection of the handle (2; 602) with the annular portion (10, 610), **characterised in that** the annular portion (10; 610) is connected to the handle (2) by a linking portion (21; 221; 321; 421; 521; 621), the linking portion being separated from the annular portion (10; 610) on the level of the annular zone (16) as far as the free end of the outer annular wall (14), as far as 45° on the circumference of the lid on both sides of the handle (2).

2. A lid according to claim 1, **characterised in that** an outer shoulder (25) is arranged on the inner face of the inner annular wall (12), respectively of the outer annular wall, opposite the annular zone (16).

3. A lid according to one of claims 1 or 2, **characterised in that** an upper flange (13) connects the inner annular wall (12) with the outer annular wall (14).

4. A lid according to one of claims 1 to 3, **characterised in that** the linking portion (21; 221; 321; 421; 521; 621) is devoid of openings.

5. A lid according to one of claims 1 to 4, **characterised in that** the linking portion (21; 221; 321; 421; 521; 621) is at least partially annular.

6. A lid according to claims 3 and 5, **characterised in that** the linking portion (21; 221) comprises an inner crown (22; 222) extending from the outer annular wall (14).

7. A lid according to one of claims 1 to 6, **characterised in that** the linking portion (21; 221; 321; 421; 521) comprises a peripheral crown (20; 220; 320; 420; 520) arranged around the annular portion (10), the handle (2) rising from said peripheral crown (20; 220; 320; 420; 520).

8. A lid according to claim 7, **characterised in that** the linking portion (21; 221; 321; 421) comprises a radial flange (23; 223; 323; 423) connected to the peripheral crown (20; 220; 320; 420).

9. A lid according to claims 6 and 8, **characterised in that** the radial flange (23) connects the top of the inner crown (22) with the top of the peripheral crown (20).

10. A lid according to one of claims 1 to 6, **characterised in that** the linking portion (621) comprises a peripheral crown portion (620) arranged partially around the annular portion (610), the handle (2) rising from said peripheral crown portion (620).

11. A lid according to claim 10, **characterised in that** the linking portion (621) comprises a radial flange portion (623) connected to the peripheral crown portion (620).

12. A lid according to claims 6 and 11, **characterised in that** the radial flange portion (623) connects the top of the inner crown (622) with the top of the portion of peripheral crown (620).

13. A lid according to one of claims 1 to 12, **characterised in that** it comprises a pouring spout (3).

14. A lid according to one of claims 1 to 13, **characterised in that** the ratio between its outer diameter and its height is higher than 4.

15. A lid according to one of claims 1 to 14, **characterised in that** the annular portion (10) forms an opening (8) whose width is more than 3 times the height of the lid.

16. A lid according to one of claims 1 to 15, **characterised in that** the protuberance(s) (15) form rotational anchoring means.

## Patentansprüche

1. Abdeckung (1; 201; 301; 401; 501; 601) für eine Kanne (6), die einen Glasbehälter (4) umfasst, wobei diese Abdeckung einen ringförmigen Teil (10; 610) umfasst, der eine ringförmige Rille (11) mit einer unteren Öffnung aufweist, wobei die ringförmige Rille (11) eine ringförmige Innenwand (12) und eine ringförmige Außenwand (14) umfasst, wobei ein oder mehrere Vorsprünge (15) in einem ringförmigen Bereich (16) ausgebildet sind, der sich auf der Innenseite der ringförmigen Außenwand (14) beziehungsweise der ringförmigen Innenwand erstreckt, wobei ein Griff (2; 602) an den ringförmigen Teil (10; 610) angefügt ist, wobei der ringförmige Bereich (16) zwischen dem freien Ende der ringförmigen Außenwand (14) und der Anfügung des Griffes (2; 602) an den ringförmigen Teil (10, 610) angeordnet ist, **dadurch gekennzeichnet, dass** der ringförmige Teil (10; 610) an den Griff (2) mittels eines Verbindungsteils (21; 221; 321; 421; 521; 621) angefügt ist, wobei der Verbindungsteil vom ringförmigen Teil (10; 610) auf Höhe des ringförmigen Bereichs (16) bis zum freien Ende der ringförmigen Außenwand (14) bis zu 45° auf dem Umfang der Abdeckung auf beiden Seiten des Griffes (2) getrennt ist.

2. Abdeckung nach Anspruch 1, **dadurch gekennzeichnet, dass** eine Ausbuchtung (25) auf der Innenseite der ringförmigen Innenwand (12) beziehungsweise der ringförmigen Außenwand gegenüber des ringförmigen Bereichs (16) ausgebildet ist.

3. Abdeckung nach einem der Ansprüche 1 oder 2, **dadurch gekennzeichnet, dass** ein oberer Kragen (13) die ringförmige Innenwand (12) mit der ringförmigen Außenwand (14) verbindet.

4. Abdeckung nach einem der Ansprüche 1 bis 3, **dadurch gekennzeichnet, dass** der Verbindungsteil (21; 221; 321; 421; 521; 621) keine Öffnungen aufweist.

5. Abdeckung nach einem der Ansprüche 1 bis 4, **dadurch gekennzeichnet, dass** der Verbindungsteil (21; 221; 321; 421; 521; 621) zumindest teilweise ringförmig ist.

6. Abdeckung nach den Ansprüchen 3 und 5, **dadurch gekennzeichnet, dass** der Verbindungsteil (21; 221) einen Innenkranz (22; 222) umfasst, der die ringförmige Außenwand (14) verlängert.

7. Abdeckung nach einem der Ansprüche 1 bis 6, **dadurch gekennzeichnet, dass** der Verbindungsteil (21; 221; 321; 421; 521) einen umlaufenden Kranz (20; 220; 320; 420; 520) umfasst, der um den ringförmigen Teil (10) herum angeordnet ist, wobei der Griff (2) aus dem umlaufenden Kranz (20; 220; 320; 420; 520) hervorgeht.

8. Abdeckung nach Anspruch 7, **dadurch gekennzeichnet, dass** der Verbindungsteil (21; 221; 321; 421) einen radialen Kragen (23; 223; 323; 423) umfasst, der mit dem umlaufenden Kranz (20; 220; 320; 420) verbunden ist.

9. Abdeckung nach den Ansprüchen 6 und 8, **dadurch gekennzeichnet, dass** der radiale Kragen (23) die Spitze des Innenkranzes (22) mit der Spitze des umlaufenden Kranzes (20) verbindet.

10. Abdeckung nach einem der Ansprüche 1 bis 6, **dadurch gekennzeichnet, dass** der Verbindungsteil (621) ein umlaufendes Kranzteilstück (620) umfasst, das teilweise um den ringförmigen Teil (610) herum angeordnet ist, wobei der Griff (2) aus dem umlaufenden Kranzteilstück (620) hervorgeht.

11. Abdeckung nach Anspruch 10, **dadurch gekennzeichnet, dass** der Verbindungsteil (621) ein radiales Kragenteilstück (623) umfasst, das mit dem umlaufenden Kranzteilstück (620) verbunden ist.

12. Abdeckung nach den Ansprüchen 6 und 11, **dadurch gekennzeichnet, dass** das radiale Kragenteilstück (623) die Spitze des Innenkranzes (622) mit der Spitze des umlaufenden Kranzteilstückes (620) verbindet.

13. Abdeckung nach einem der Ansprüche 1 bis 12, **dadurch gekennzeichnet, dass** sie eine Ausgusstülle (3) umfasst.

14. Abdeckung nach einem der Ansprüche 1 bis 13, **dadurch gekennzeichnet, dass** sie ein Verhältnis des Außendurchmessers zur Höhe von über 4 aufweist.

15. Abdeckung nach einem der Ansprüche 1 bis 14, **dadurch gekennzeichnet, dass** der ringförmige Teil (10) eine Öffnung (8) ausbildet, deren Breite größer ist als 3 Mal die Höhe der Abdeckung.

16. Abdeckung nach einem der Ansprüche 1 bis 15, **dadurch gekennzeichnet, dass** der oder die Vorsprünge (15) Drehverankerungsmittel ausbilden.
